# EUROPÄISCHE PATENTSCHRIFT

(11) **EP 0 668 813 B1**
(45) Veröffentlichungstag und Bekanntmachung des Hinweises auf die Patenterteilung: **05.11.1997**
(21) Anmeldenummer: 94927608.3
(22) Anmeldetag: 13.09.1994
(51) Int. Cl.: B25J 19/06, B23K 9/28

(54) **WERKZEUGHALTER, INSBESONDERE FÜR ROBOTERSCHWEISS- ODER -SCHNEIDBRENNER**
TOOL HOLDER, IN PARTICULAR FOR ROBOT WELDING OR CUTTING TORCHES
PORTE-OUTIL, NOTAMMENT POUR CHALUMEAUX SOUDEURS OU COUPEURS ROBOTISES

(30) Priorität: 13.09.1993 DE 4330877
(43) Veröffentlichungstag der Anmeldung: 30.08.1995
(73) Patentinhaber: ALEXANDER BINZEL GmbH & Co. KG, D-35418 Buseck (DE)
(72) Erfinder: SPERLING, Hermann, D-55296 Gau-Bischhofsheim (DE); MANCHE, Jörg, D-35614 Asslar (DE); SCHWARZ, Jörg, D-35418 Alten-Buseck (DE)
(74) Vertreter: Müller, Eckhard, Dr.
(86) Internationale Anmeldenummer: EP9403053
(87) Internationale Veröffentlichungsnummer: WO9507802

(56) Entgegenhaltungen:
- EP-A- 0 249 774
- DE-A- 3 717 616
- DE-A- 3 728 204

## Beschreibung

Die Erfindung bezieht sich auf einen Werkzeughalter, insbesondere für Roboterschweiß- oder -schneidbrenner, gemäß dem Oberbegriff des Anspruches 1.

Derartige Halterungen dienen dazu, das Werkzeug, wie bspw. einen Schweißbrenner, an einem Roboterarm zu halten und bei einer Kollision des Werkzeuges oder des Brenners mit dem zu bearbeitenden Werkstück oder einem Peripherieteil ein Ausweichen des Werkzeuges zu ermöglichen. Hierdurch soll eine Beschädigung von Werkstück und Werkzeug vermieden werden. Bei einer solchen Ausweichbewegung des Werkzeuges wird ein Notschalter betätigt, wodurch die Bewegung des Roboters entweder abgestellt oder der Roboterarm reversierbar in eine Ausgangsposition zurückgefahren wird.

Ein Brennerhalter der eingangs genannten Art ist bspw. aus der US-PS 4 998 606 bekannt mit in einem Gehäuse geführtem federbelasteten Kolbenteil, welches ein innerhalb des Gehäuses aufgenommene und über einen Auslösehebel mit einem Werkzeugverbindungsteil verbundenes Anschlagteil in einer Grundstellung an der zugewandten Gehäusewandung hält. Bei einer Druckbelastung oder Auslenkung des Werkzeugverbindungsteils bewirkt das plattenförmige Anschlagteil eine axiale Verschiebung des federbelasteten Kolbenteils, wodurch ein Schaltelement zum stillsetzen der Bewegung des Roboters oder Zurückfahren in eine Ausgangsposition betätigt wird. An dem Anschlagteil sind auf einem Kreisumfang asymmetrisch verteilte halbkugelförmige Elemente vorgesehen, welche in Grundstellung des Werkzeugverbindungsteils in Vertiefungen an der zugewandten Innenseite des Gehäusedeckels eingedrückt sind. Nachteilig hierbei ist, daß die Kugelabstützung bzw. die Vertiefungen innerhalb des Deckels äußerst präzise gearbeitet sein müssen, damit das Werkzeugverbindungsteil stets exakt in seine Grundstellung zurückgestellt wird. Dies ist insbesondere wichtig, um den vorgegebenen Referenzpunkt des Werkzeuges am Roboterarm wieder zu erreichen, wie bspw. bei Schweiß- oder - schneidbrennern. Dieser Referenzpunkt wird üblicherweise als "Tool-Center-Point", abgekürzt "TCP", bezeichnet.

Davon ausgehend liegt der Erfindung die Aufgabe zugrunde, einen Werkzeughalter der eingangs genannten Art dahingehend weiterzubilden, daß bei kompaktem Aufbau, möglichst großem Auslenkwinkel eine gleichmäßige Auslösekraft über alle Kipprichtungen des Werkzeugverbindungsteils und eine hohe Rückstellgenauigkeit in die Grundposition erreicht ist.

Die Aufgabe wird gelöst durch die Merkmale des des Anspruches 1.

Durch die Dreipunkt-Auflage des mit dem Werkzeugverbindungsteil verbundenen Anschlagteils ist eine stabile und insbesondere kippsichere Lage des Werkzeuges in seiner Grundstellung erreicht. Auch ermöglicht die Dreipunkt-Auflage eine große Rückstellgenauigkeit nach einer etwaigen Auslenkung des Werkzeuges infolge einer Kollision. Dadurch, daß aber bei einer Kippbewegung weitere Positionierelemente in Anlagestellung treten, werden auch die Vorteile einer Mehrpunktauflage mit über alle Kipprichtungen i. w. gleichen Auslösekräften erreicht.

Nach einer Ausgestaltung der Erfindung liegen die drei Positionierelemente, welche sich in Grundstellung des Anschlagteils in Anlagestellung befinden, in den Ecken eines gleichschenkligen Dreiecks, was zu einer besonders stabilen und kippsicheren Lage des Werkzeuges führt.

Auch empfiehlt es sich, daß die zwischen Anschlagteil und Gehäuseteil wirkenden Positionierelemente symmetrisch auf einem Kreisumfang angeordnet sind, was die Vergleichmäßigung der Kraftverhältnisse über unterschiedliche Kipprichtungen begünstigt.

Nach einer Ausgestaltung der Erfindung sind die Positionierelemente als an dem Gehäuseteil in einer Halterung aufgenommene Kugeln mit zugeordneten Senkungen an dem Anschlagteil ausgebildet, wobei die Senkungen der drei in Grundstellung des Anschlagteils in Anlagestellung befindlichen Positionierelemente eine geringere Tiefe als die übrigen Senkungen aufweisen. Hierdurch ist in konstruktions- und fertigungstechnisch einfacher Weise die Dreipunkt-Auflage in Grundstellung und bei Auftreten einer Kippbewegung auf das Werkzeug eine Sechspunkt-Auflage oder ein Mehrfaches davon erreicht.

In vorteilhafter Weise sind Kolbenteil und Anschlagteil gegeneinander drehgesichert, was nach einem Vorschlag der Erfindung dadurch realisiert werden kann, daß an dem Anschlagteil wenigstens ein in eine zugeordnete Bohrung des Kolbenteils zum Eingreifen ausgebildeter Stift vorgesehen ist. Hierdurch kann erreicht werden, daß bei einer unerwünschten Drehbewegung des Werkzeuges auch der verschiebbare Kolbenteil mitgedreht und die Sicherheitsabschaltung betätigt wird.

Bei einer wiederum anderen Ausgestaltung der Erfindung kann das Kolbenteil einen nach radial außen weisenden Bund aufweisen, welcher bei einem axialen Verschieben des Kolbenteils ein Schaltelement der Detektoreinrichtung betätigt. Dieser Bund sollte sich vorteilhafter Weise lediglich über einen vorgegebenen Winkel umfangsseitig des Kolbenteils erstrecken. Hierdurch ist erreicht, daß bspw. der Roboterantrieb in allen Positionen außer der Grundstellung abgeschaltet wird.

Andere Ausgestaltungen der Erfindung finden sich in den weiteren Unteransprüchen.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnung.

Es zeigen:
- Figur 1: eine perspektivische Ansicht einer möglichen Ausführungsform eines erfindungsgemäßen Werkzeughalters,
- Figur 2: einen Längsschnitt durch den Werkzeughalter gemäß Figur 1,
- Figur 3: den Werkzeughalter gemäß Figur 2 in einer ausgelenkten Stellung des Werkzeuges bei einer Kollision mit einem Werkstück,
- Figur 4a: eine Dreipunkt-Auflage eines Werkzeughalters in schematischer Darstellung,
- Figur 4b: die Dreipunkt-Auflage gemäß Figur 4a in einem Schnitt,
- Figur 5a: eine schematische Darstellung der Lagerung eines Werkzeughalters mit Sechspunkt-Auflage,
- Figur 5b: die konstruktive Ausgestaltung der Abstützung des Werkzeughalters gemäß Figur 5a und
- Figur 6: den Werkzeughalter gemäß Figur 1 mit einer weiteren Ausgestaltung des Werkzeugverbindungsteils.

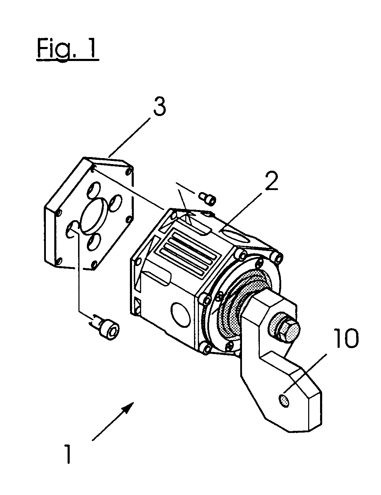

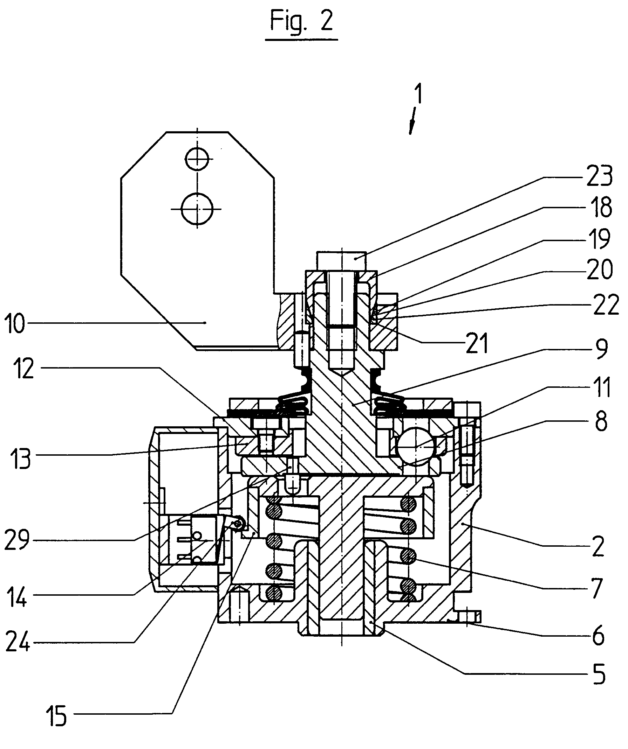

Der Werkzeughalter 1 gemäß Figur 1 ist über einen Zwischenflansch 3 an einem (nicht dargestellten) Roboterarm festgelegt. Wie aus Figur 2 zu ersehen, ist innerhalb des topfförmigen Gehäuses 2 des Werkzeughalters 1 ein verschiebbarer Kolbenteil 4 innerhalb einer Axialführung 5 aufgenommen. Die Axialführung 5 ist bei dem hier gewählten Ausführungsbeispiel an dem dem Roboterarm zugewandten Bodenteil 6 des Gehäuses 2 gebildet. Das Kolbenteil 4 ist mittels einer sich an dem Bodenteil 6 abstützenden Druckfeder 7 gegen ein tellerförmiges Anschlagteil 8 eines Auslösehebels 9 gedrückt. An dem Auslösehebel 9 ist ein Werkzeugverbindungsteil 10 angeordnet, an welchem Werkzeuge, wie bspw. Schweißbrenner oder Werkzeugaufnahmen befestigt werden können.

Das Anschlagteil 8 des Auslösehebels 9 ist mittels auf einem Kreisumfang symmetrisch verteilt angeordneten Kugeln 11 an dem das Gehäuse auf seiner Frontseite abschließenden Deckel 12 abgestützt. Die Kugeln 11 sind bei dem hier gewählten Ausführungsbeispiel in einer mit dem Deckel 12 verbundenen Halterung 13 in Form eines Käfigs gehalten. Selbstverständlich ist es auch möglich, den Käfig 13 am Anschlagteil 8 des Auslösehebels 9 anzubringen. In Ausgangsstellung des Auslösehebels 9 greifen, wie noch weiter unten im einzelnen beschrieben, die Kugeln 11 in zugeordnete Senkungen 16, 17 am Anschlagteil 8 ein. In diesem Zustand befindet sich der Auslösehebel 9 in seiner Grundstellung bzw. Referenzlage für die Steuerung des Roboterarmes.

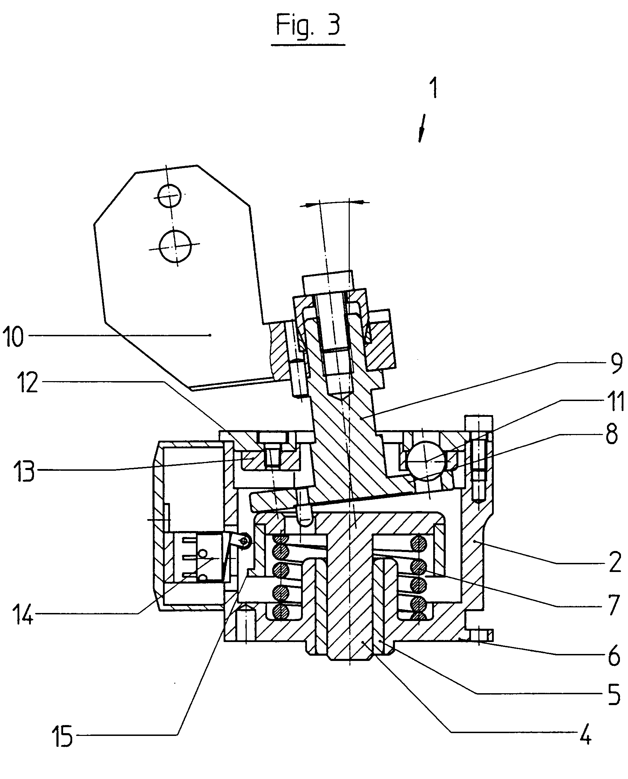

Bei einer Kollision des Roboters bzw. Werkzeuges mit dem Werkstück oder einem Peripherieteil kommt es zu einem Verkippen des Auslösehebels 9, wie dies in Figur 3 gezeigt ist. Durch diese Ausweichbewegung des Auslösehebels 9 wird eine Zerstörung des Werkzeuges, des Werkstückes oder des jeweiligen Peripherieteils vermieden. Bei der Auslenkbewegung kippt das tellerförmige Anschlagteil 8 des Auslösehebels 9, wodurch das Kolbenteil 4 gegen die Kraft der Feder 7 in Richtung des Bodenteils 6 des Gehäuses 2 verschoben wird. Dabei wird die Not-Aus-Schaltung betätigt, wodurch die Bewegung des Roboterarms abgeschaltet wird bzw. eine Reversierung in eine Ausgangsstellung erfolgt. Die schaltungstechnische Anordnung ist bei dem hier gewählten Ausführungsbeispiel so getroffen, daß ein am Kolbenteil 4 gebildeter radial nach außen weisender Bund 15 außer Kontakt mit einem Schaltelement 24 der Schaltungsanordnung bzw. Detektoreinrichtung 14 gelangt. Bei dem Werkzeughalter 1 wird also eine Druckbelastung und/oder eine Kippbewegung des mit dem jeweiligen Werkzeug verbundenen Auslösehebels 9 in eine axiale Bewegung des Kolbenteils 4 umgewandelt, welches über das Schaltelement 24 den Roboterarm stillsetzt bzw. zur Reversierung veranlaßt.

Der radiale Bund 15 an dem Kolbenteil 4 erstreckt sich bei dem hier gewählten Ausführungsbeispiel lediglich über ein Kreissegment von 45°, so daß der Antrieb des Roboterarms in allen Positionen außer der Grundstellung abgeschaltet wird.

Wie weiterhin aus Figur 2 ersichtlich, ist an dem tellerförmigen Anschlagteil 8 ein in eine zugeordnete Bohrung des Kolbenteils 4 eingreifender Stift 29 vorgesehen, daß Anschlagteil 8 und Kolbenteil 4 drehgesichert miteinander verbunden sind.

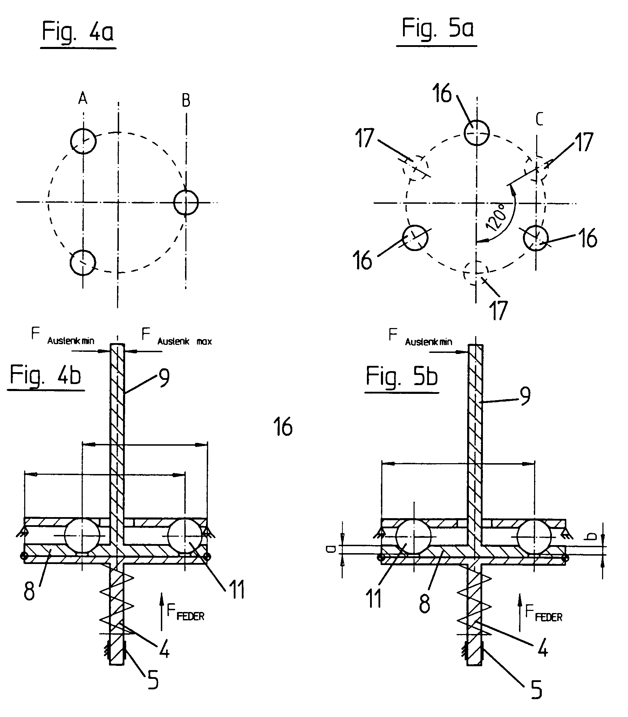

Bei dem im Ausführungsbeispiel dargestellten Werkzeughalter ist eine Sechspunkt-Auflage zwischen Anschlagteil 8 des Auslösehebels 9 und dem das Gehäuse 2 abschließenden Deckel 12 vorgesehen. Eine solche Sechspunkt-Auflage hat gegenüber einer Dreipunkt-Auflage oder auch einer Fünfpunkt-Auflage den Vorteil einer gleichmäßigeren Auslenkkraft. Dies wird nun anhand der Figuren 4 und 5 näher beschrieben.

Grundsätzlich ist zum Erreichen einer stabilen, insbesondere kippsicheren Lage eines Werkstückes oder Werkzeuges eine Dreipunkt-Auflage von Vorteil. Eine Dreipunkt-Auflage bei der Roboterhalterung, wie sie in Figuren 4a und 4b dargestellt ist, besitzt eine hohe Rückstellgenauigkeit, wenn bspw. nach einer Auslenkung des Werkzeuges infolge einer Kollision mit dem Werkstück ein Rückstellen auf den Referenzpunkt erforderlich wird. Nachteil der Dreipunkt-Auflage ist jedoch, daß die Auslösekraft je nach Kipprichtung unterschiedlich sein kann, wie dies aus Figuren 4a und 4b hervorgeht. Für ein Kippen über zwei Punkte, entsprechend einer Kippbewegung um die Achse A, wird eine minimale Auslösekraft benötigt. Für das Kippen über einen Punkt, entsprechend einer Kippbewegung um die Achse B, wird dagegen eine maximale Auslösekraft benötigt, da im Vergleich zur Kippung um die Achse A andere Hebelarmverhältnisse vorliegen. Um die Hebelarme aneinander anzugleichen, ist bei dem hier gewählten Ausführungsbeispiel eine Sechspunkt-Auflage vorgesehen, wie dies in Figuren 5a und 5b dargestellt ist. Selbstverständlich ist es auch möglich, eine Neun-, Zwölf- oder etwa eine Fünfzehnpunkt-Auflage einzusetzen. Hierdurch wird die Kippachse C im Vergleich zur Dreipunkt-Auflage nach außen verlegt, so daß der Unterschied zwischen maximaler und minimaler Auslösekraft wesentlich geringer ist. Dabei legt die Kippachse C die Richtung der geringsten Auslösekraft fest.

An sich gehen mit einer solchen Auflage die Vorteile einer Dreipunkt-Auflage verloren. Um dies zu vermeiden, sind die in dem Anschlagteil 8 vorgesehenen Senkungen bzw. Ausnehmungen 16, 17 für die Kugeln 11 alternierend tiefer bzw. höher gesenkt. Wie in Figur 5b angedeutet, sind die Senkungen 17 mit einem Senkungsmaß "b" tiefer ausgebildet als die Senkungen 16 mit einem Senkungsmaß a. In Ruhestellung liegt das tellerförmige Anschlagteil 8 des Auslösehebels 9 nur an den in den Senkungen 16 angeordneten Kugeln 11 an. Dadurch ist in Ruhestellung eine Dreipunkt-Auflage gewährleistet. Bei geringem Kippen des Auslösehebels 9 liegt jedoch auch die in einer der jeweiligen Kipprichtung tiefer gesenkten Bohrung 17 angeordnete Kugel 11 an dem Anschlagteil 8 an, und es entstehen dann die vorteilhaften Kraftverhältnisse einer Sechspunkt-Auflage mit über alle Kipprichtungen i. w. gleichen Auslösekräften. Bei den Senkungen 16, 17 ist zu beachten, daß das Schaltelement 24 des Not-Aus-Schalters 14 erst betätigt wird, wenn das Anschlagteil 8 bei einer Kippbewegung tatsächlich in der in der tieferen Senkung 17 angeordneten Kugel 11 anliegt.

Die Festlegung des Werkzeugverbindungsteils 10 an dem Halter erfolgt mittels eines Ringfeder-Spannelementes 18, welches sich mit einer an seinem vorderen Ende vorgesehenen konischen Anlagefläche 19 in Anlagestellung an einer komplementären Anlagefläche 20 eines sich an einem Bund 21 des Werkzeugverbindungsteils 10 abstützenden Innenringes 22 befindet. Das Ringfeder-Spannelement 18 ist mittels einer in den Auslösehebel 9 einschraubbaren Schraubverbindung 23 im Preßsitz an dem Innenring 22 gehalten. Hierdurch wird zum einen eine hohe Befestigungskraft erreicht, indem das Ringfeder-Spannelement 18 nach innen gepreßt und der Innenring 22 radial nach außen aufgeweitet wird. Gleichzeitig ergibt sich durch die Elastizität des Ringfeder-Spannelementes 18 beim Lösen der Schraubverbindung 23 nur ein geringes Abzugsmoment.

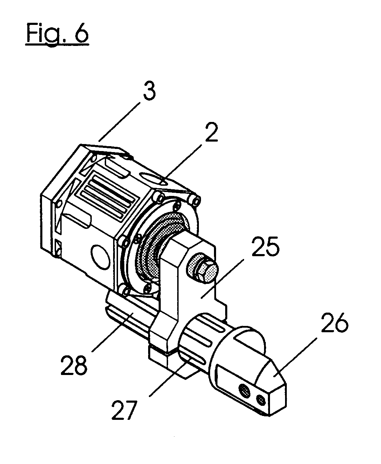

Der Unterschied des Werkzeughalters gemäß Figur 6 gegenüber demjenigen gemäß Figur 1 besteht darin, daß als Werkzeugverbindungsteil 10 eine Klemmhalterung 25 für eine axial verstellbare Support-Aufnahme 26 vorgesehen ist. Diese Support-Aufnahme 26 ist stufenlos verstellbar und zusätzlich verdrehbar. Bei dem hier gewählten Ausführungsbeispiel ist eine Verdrehbarkeit um jeweils 30° vorgesehen, wobei ein oder mehrere an der Klemmhalterung 25 angeordnete Stifte in eine entsprechende Längsnut 27 der Support-Aufnahme 26 eingreift bzw. eingreifen. Hierdurch ist eine selbsttätige Justierung der Support-Aufnahme 26 erreicht. Selbstverständlich ist es auch möglich, die Längsnuten 27 in einem anderen Winkelabstand auf dem Außenumfang der Support-Aufnahme 26 anzuordnen.

Im Falle, daß die Support-Aufnahme 26 mit ihrem in der Klemmhalterung 25 aufgenommenen Schaft 28 zu nahe am Gehäuse 2 des Werkzeughalters zu liegen kommen oder bei einer etwaigen Kippbewegung daran anstoßen sollte, ist es natürlich auch möglich, den Schaft 28 entsprechend zu kürzen.

Die Außenkontur des Gehäuses 2 ist sechseckig, wodurch gegenüber einen im Querschnitt kreisförmigen Gehäuse eine Platzersparnis bzw. Raumersparnis erreicht wird, was bei Roboteranwendung von besonderer Bedeutung ist. Vor allem ist die Gewichtsersparnis des erfindungsgemäßen Gehäuses von besonderem Vorteil im Hinblick auf die zu bewegenden trägen Massen durch den Roboter.

### Bezugszeichenliste

- 1: - Werkzeughalter
- 2: - Gehäuse
- 3: - Zwischenflansch
- 4: - Kolbenteil
- 5: - Axialführung
- 6: - Bodenteil
- 7: - Druckfeder
- 8: - tellerförmiges Anschlagteil
- 9: - Auslösehebel
- 10: - Werkzeugverbindungsteil
- 11: - Kugel
- 12: - Deckel
- 13: - Halterung, Käfig
- 14: - Detektoreinrichtung, Schaltungsanordnung
- 15: - Bund
- 16: - Senkung
- 17: - Senkung
- 18: - Ringfeder, Spannelement
- 19: - Anschlagfläche
- 20: - Anschlagfläche
- 21: - Bund
- 22: - Innenring
- 23: - Schraubverbindung
- 24: - Schaltelement
- 25: - Klemmhalterung
- 26: - Werkzeugverbindungsteil, Support-Aufnahme
- 27: - Längsnut
- 28: - Schaft
- 29: - Stift
- A: - Achse
- B: - Achse
- C: - Achse
- a: - Senkungsmaß
- b: - Senkungsmaß

## Patentansprüche

1. Werkzeughalter, insbesondere für Roboterschweiß- oder -schneidbrenner, mit in einem Gehäuse (2) geführten, federbelasteten Kolbenteil (4), welches ein in dem Gehäuse (2) aufgenommenes und mit einem Werkzeugverbindungsteil (10) verbundenes plattenförmiges Anschlagteil (8) in einer Grundstellung an einem zugewandten Gehäuseteil (12) hält und bei einer Druckbelastung oder Auslenkung des Werkzeugverbindungsteils (10) bzw. seines Anschlagteils (8) unter Auslösen eines Signals einer Detektoreinrichtung (14) axial verschiebbar ist, wobei in der Grundstellung an dem Anschlagteil (8) und dem zugewandten Gehäuseteil (12) miteinander in Wirkstellung tretende Positionierelemente (11, 16, 17) vorgesehen sind, dadurch gekennzeichnet, daß sich das Anschlagteil (8) in Grundstellung in Art einer Dreipunkt-Auflage über lediglich drei Positionierelemente (11, 16) an dem zugewandten Gehäuseteil (12) abstützt, während die weiteren Positionierelemente (11, 17) von Anschlagteil (8) und Gehäuseteil (12) jeweils erst bei einer entsprechenden Kippbewegung des Werkzeugverbindungsteils (10) bzw. des Anschlagteils (8) in Anlagestellung treten.

2. Werkzeughalter nach Anspruch 1, dadurch gekennzeichnet, daß die drei in Grundstellung des Anschlagteils (8) in Anlagestellung befindlichen Positionierelemente (11, 16) in den Ecken eines gleichschenkligen Dreiecks zu liegen kommen.

3. Werkzeughalter nach Anspruch 1 oder 2, dadurch gekennzeichnet, daß die Anzahl der Positionierelemente (11, 16, 17) ein Zwei-, Drei- oder Vielfaches von drei beträgt.

4. Werkzeughalter nach einem der Ansprüche 1 bis 3, dadurch gekennzeichnet, daß die Positionierelemente (11, 16, 17) i. w. symmetrisch verteilt auf einem Kreisumfang angeordnet sind.

5. Werkzeughalter nach einem oder mehreren der vorhergehenden Ansprüche, dadurch gekennzeichnet, daß die jeweils in Wirkstellung miteinander tretenden Positionierelemente als etwa halbkugel- oder kugelförmige Elemente (11) mit entsprechenden Aufnahmen (16, 17) ausgebildet sind.

6. Werkzeughalter nach einem oder mehreren der vorhergehenden Ansprüche, dadurch gekennzeichnet, daß die Positionierelemente als an dem Gehäuseteil (12) in einer Halterung (13) aufgenommene Kugeln (11) mit zugeordneten Senkungen (16, 17) an dem Anschlagteil (8) ausgebildet sind, wobei die Senkungen (16) der drei in Grundstellung des Anschlagteils (8) in Anlagestellung befindlichen Positionierelemente eine geringere Tiefe a als die übrigen Senkungen (17) aufweisen.

7. Werkzeughalter nach einem oder mehreren der vorhergehenden Ansprüche, dadurch gekennzeichnet, daß das Kolbenteil (4) und das Anschlagteil (8) gegeneinander drehgesichert miteinander verbunden sind.

8. Werkzeughalter nach Anspruch 7, dadurch gekennzeichnet, daß an dem Anschlagteil (8) wenigstens ein in eine zugeordnete Bohrung des Kolbenteils (4) zum Eingreifen ausgebildeter Stift (29) vorgesehen ist.

9. Werkzeughalter nach einem oder mehreren der vorhergehenden Ansprüche, dadurch gekennzeichnet, daß der Kolbenteil (4) einen nach radial außen weisenden Bund (15) aufweist, welcher bei Verschieben des Kolbenteils (4) ein Schaltelement (24) der Detektoreinrichtung (14) betätigt.

10. Werkzeughalter nach Anspruch 9, dadurch gekennzeichnet, daß sich der Bund (15) lediglich über ein Kreissegment, bspw. einen Winkel von etwa 45°, umfangsseitig des Kolbenteils (4) erstreckt.

11. Werkzeughalter nach einem oder mehreren der vorhergehenden Ansprüche, dadurch gekennzeichnet, daß das Werkzeugverbindungsteil (10) mittels eines Ringfeder-Spannelementes (18) an einem mit dem Anschlagteil (8) verbundenen Auslösehebel (9) gehalten ist mit einer am vorderen Ende des Ringfeder-Spannelementes (18) vorgesehenen konischen Anlagefläche (19), welche in Anlagestellung mit einer komplementären Anlagefläche (20) an dem Werkzeugverbindungsteil (10) tritt und mittels einer Schraubverbindung (23) im Preßsitz daran gehalten ist.

12. Werkzeughalter nach einem oder mehreren der vorhergehenden Ansprüche, dadurch gekennzeichnet, daß das Werkzeugverbindungsteil (26) mittels einer Klemmhalterung (25) an einem mit dem Anschlagteil (8) verbundenen Auslösehebel (9) gehalten ist.

13. Werkzeughalter nach Anspruch 12, dadurch gekennzeichnet, daß an dem Werkzeugverbindungsteil (26), vorzugsweise in äquidistanten Abständen über seinen Umfang verteilt angeordnete Längsnuten (27) vorgesehen sind und die Klemmhalterung (25) wenigstens einen zum wahlweisen Eingreifen in eine der Längsnuten (27) ausgebildeten Justierstift aufweist.

## Claims

1. Tool holder, in particular for robot welding torches or cutting torches, with a spring-loaded piston part (4), which is guided in a housing (2) and which retains a plate-shaped abutment part (8), which is received in the housing (2) and connected with a tool-connecting part (10), in a basic setting at a facing housing part (12) and is displaceable axially on a pressure loading or deflection of the tool-connecting part (10) or its abutment part (8) whilst triggering a signal of a detector equipment (14), wherein positioning elements (11, 16, 17) are provided, which come into operative setting with one another in the basic setting at the abutment part (8) and the facing housing part (12), characterised thereby, that the abutment part (8) in the basic setting bears against the facing housing part (12) by way of merely three positioning elements (11, 16) in the manner of a three-point contact, whilst the further positioning elements (11, 17) of the abutment part (8) and the housing part (12) each come into contact setting only on a corresponding tilting movement of either the tool-connecting part (10) or of the abutment part (8).

2. Tool holder according to claim 1, characterised thereby, that the three positioning elements (11, 16), which are disposed in contact setting in the basic setting of the abutment part (8), come to lie on the corners of an isosceles triangle.

3. Tool holder according to claim 1 or 2, characterised thereby, that the number of the positioning elements (11, 16, 17) amounts to two times, three times or more times three.

4. Tool holder according to one of the claims 1 to 3, characterised thereby, that the positioning elements (11, 16, 17) are arranged to be substantially symmetrically distributed over the circumference of a circle.

5. Tool holder according to one or more of the preceding claims, characterised thereby, that the positioning elements, which come in operative setting with one another each time, are formed as about hemispherical or spherical elements (11) with corresponding receptacles (16, 17).

6. Tool holder according to one or more of the preceding claims, characterised thereby, that the positioning elements are formed as spheres (11), which are received in a mounting (13) at the housing part (12), with associated depressions (16, 17) at the abutment part (8), wherein the depressions (16) of the three positioning elements, which are disposed in contact setting in the basic setting of the abutment part (8), have a lesser depth a than the remaining depressions (17).

7. Tool holder according to one or more of the preceding claims, characterised thereby, that the piston part (4) and the abutment part (8) are connected together to be secure against rotation relative to one another.

8. Tool holder according to claim 7, characterised thereby, that at least one pin (29), which is formed for engagement into an associated bore of the piston part (4), is provided at the abutment part (8).

9. Tool holder according to one or more of the preceding claims, characterised thereby, that the piston part (4) displays at least one collar (15), which faces radially outwards and on displacement of the piston part (4) actuates a switching element (24) of the detector equipment (14).

10. Tool holder according to claim 9, characterised thereby, that the collar (15) extends circumferentially of the piston part (4) over merely a circular segment, for example an angle of about 45°.

11. Tool holder according to one or more of the preceding claims, characterised thereby, that the tool-connecting part (10) is retained at a trigger lever (9), which is connected with the abutment part (8), by means of an annular spring tightening element (18) with a conical contact area (19), which is provided at the front end of the annular spring tightening element (18) and which comes into contact setting with a complementary contact area (20) at the tool-connecting part (10) and is retained in press fit thereat by means of a screw connection (23).

12. Tool holder according to one or more of the preceding claims, characterised thereby, that the tool-connecting part (26) is retained at a trigger lever (9), which is connected with the abutment part (8), by means of a clamping holder (25).

13. Tool holder according to claim 12, characterised thereby, that longitudinal grooves (27) are provided at the tool-connecting part (26), preferably distributed over its circumference at equidistant spacings, and the clamping holder (25) displays at least one adjusting pin formed for selectable engagement into one of the longitudinal grooves (27).

## Revendications

1. Porte-outil, notamment pour des chalumeaux soudeurs ou coupeurs robotisés, comportant une partie formant piston (4), qui est guidée dans un boîtier (2), est chargée élastiquement et maintient, dans une position de base contre un élément de boîtier voisin (12), une partie de butée en forme de plaque (8) logée dans le boîtier (2) et reliée à une partie (10) de liaison de l'outil et, dans le cas d'une charge en pression ou d'une déviation de la partie (10) de liaison de l'outil ou de son élément de butée (8), est déplaçable axialement en déclenchant un signal d'un dispositif détecteur (14), des éléments de positionnement (11, 16, 17), qui coopèrent entre eux dans la position de base, étant prévus sur l'élément de butée (8) et l'élément de boîtier voisin (12) étant prévus, caractérisé en ce que, dans la position de base, l'élément de butée (8) prend appui, à la manière d'un appui en trois points par l'intermédiaire de seulement trois éléments de positionnement (11, 16), sur l'élément de boîtier voisin (12), tandis que les autres éléments de positionnement (11, 17) de l'élément de butée (8) et de l'élément de boîtier (12) viennent en position appliquée uniquement dans le cas d'un mouvement de basculement correspondant de la partie (10) de liaison de l'outil et de l'élément de butée (8).

2. Porte-outil selon la revendication 1, caractérisé en ce que les trois éléments de positionnement (11, 16) situés dans une position appliquée lorsque l'élément de butée (8) est dans la position de base, viennent se placer aux sommets d'un triangle isocèle.

3. Porte-outil selon la revendication 1 ou 2, caractérisé en ce que le nombre des éléments de positionnement (11, 16, 17) est égal au double, au triple ou à un multiple de trois.

4. Porte-outil selon l'une des revendications 1 à 3, caractérisé en ce que les éléments de positionnement (12, 16, 17) sont disposés en étant répartis sensiblement symétriquement sur une périphérie circulaire.

5. Porte-outil selon une ou plusieurs des revendications précédentes, caractérisé en ce que les éléments de positionnement, qui coopèrent respectivement entre eux, sont agencés sous la forme d'éléments (11) de forme approximativement hémisphérique ou sphérique et d'évidements correspondants (16, 17).

6. Porte-outil selon une ou plusieurs des revendications précédentes, caractérisé en ce que les éléments de positionnement sont agencés sous la forme de billes (11) qui sont logées dans un élément de retenue (13) sur l'élément de boîtier (12), tandis que des renfoncements associés (16, 17) sont formés sur l'élément de butée (8), les renfoncements (16) des trois éléments de positionnement situés en position appliquée lorsque l'élément de butée (8) est dans la position de base possédant une profondeur (a) inférieure à celle des autres renfoncements (17).

7. Porte-outil selon une ou plusieurs des revendications précédentes, caractérisé en ce que l'élément de piston (4) et l'élément de butée (8) sont reliés entre eux en étant bloqués réciproquement en rotation.

8. Porte-outil selon la revendication 7, caractérisé en ce que sur l'élément de butée (8) est prévue au moins une tige (29) agencée de manière à s'engager dans un perçage associé de l'élément de piston (4).

9. Porte-outil selon une ou plusieurs des revendications précédentes, caractérisé en ce que l'élément de piston (4) possède un collet radial (15) qui s'étend vers l'extérieur et qui, lors du déplacement de l'élément de piston (4), actionne un élément de commutation (24) du dispositif détecteur (14).

10. Porte-outil selon la revendication 9, caractérisé en ce que le collet (15) s'étend seulement sur un segment de cercle, par exemple sur un angle d'environ 45°, sur la périphérie de l'élément de piston (4).

11. Porte-outil selon une ou plusieurs des revendications précédentes, caractérisé en ce que la partie (10) de liaison de l'outil est retenue au moyen d'un élément de serrage en forme d'anneau-ressort (18) sur un levier de déclenchement (9) relié à l'élément de butée (8), au moyen d'une surface conique d'application (19), qui est prévue sur l'extrémité avant de l'élément de serrage en forme d'anneau-ressort (18) et qui, lorsqu'elle est appliquée contre une surface complémentaire d'application (20) située sur la partie (17) de liaison de l'outil, est retenue selon un ajustement serré sur cette surface au moyen d'une liaison à vis (23).

12. Porte-outil selon une ou plusieurs des revendications précédentes, caractérisé en ce que la partie (26) de liaison de l'outil est retenue, au moyen d'un système de retenue à serrage (25), sur un levier de déclenchement (9) relié à l'élément de butée (8).

13. Porte-outil selon la revendication 12, caractérisé en ce que des rainures longitudinales (27) sont prévues sur la partie (26) de liaison de l'outil, en étant réparties sur sa périphérie de préférence en étant équidistantes, et le système de retenue à serrage (25) comporte au moins une goupille d'ajustement, agencée de manière à s'engager au choix dans l'une des rainures longitudinales (27).
